Europäisches Patentamt

European Patent Office

Office européen des brevets

(11) Publication number: **0 275 878 B1**

## EUROPEAN PATENT SPECIFICATION

(45) Date of publication of patent specification: **06.05.92**  (51) Int. Cl.5: **A21D  10/02**

(21) Application number: **88100129.1**

(22) Date of filing: **07.01.88**

(54) Room temperature storage stable dough.

(30) Priority: **09.01.87 DE 3700515**

(43) Date of publication of application:
**27.07.88 Bulletin  88/30**

(45) Publication of the grant of the patent:
**06.05.92 Bulletin  92/19**

(84) Designated Contracting States:
**AT BE CH FR GB IT LI LU NL**

(56) References cited:
| | |
|---|---|
| EP-A- 0 112 504 | GB-A- 1 175 595 |
| NL-A- 291 249 | US-A- 1 625 022 |
| US-A- 3 021 220 | US-A- 3 692 535 |
| US-A- 3 753 734 | US-A- 4 777 057 |

(73) Proprietor: **CPC INTERNATIONAL INC.
International Plaza P.O. Box 8000
Englewood Cliffs New Jersey 07632(US)**

(72) Inventor: **Seewi,Gila
Derfflingerstrasse 17
W-7100 Heilbronn-Bockingen(DE)**
Inventor: **Schupp,Johannes
Stedinger Strasse 18
W-7100 Heilbronn-Bockingen(DE)**
Inventor: **Wildfeuer,Irmtraud Dr.
Talheimer Strasse 21
W-7101 Flein(DE)**
Inventor: **Bohrmann,Hans Dr.
Mörikeweg 8
W-7129 Talheim(DE)**

(74) Representative: **Lederer, Franz, Dr. et al
Lederer, Keller & Riederer Patentanwälte
Lucile-Grahn-Strasse 22
W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2.18/2.0)

EP 0 275 878 B1

## Description

### FIELD OF THE INVENTION

The present invention relates to a ready-to-bake dough which is storage stable at room temperature for at least twelve months.

### BACKGROUND OF THE INVENTION

Baking dough prepared in the home or by chefs is generally a mixture of flour, fat and water which is kneaded together before baking. With the increasing popularity of convenience foods there has been a growing demand for a stable ready-mixed dough which does not require the time-consuming steps of blending, mixing and kneading before use.

An important consideration in formulating a ready-to-bake dough is storage stability. A considerable period of time may elapse after preparation by the manufacturer and purchase by the consumer. A further period of time may elapse before the consumer uses the product.

One method of preserving dough is through refrigeration. This is an acceptable approach, but has the disadvantages of requiring refrigeration space and equipment and also requiring the dough product to be thawed before use.

Another approach has been to try to make the dough stable at room temperature. Stability may, for example, be achieved by incorporating preservatives in the dough to prevent microbial attack. Another approach is to include additives such as polyhydric alcohols which, by lowering the water activity of the dough, impart stability. An example of this approach is disclosed in European Patent Application No. 145,550 wherein the ingredients of a storage-stable dough are selected to give the product a water activity of less than about 0.72.

A paper in the Journal of Food Science, Vol. 49 (1984) pp. 1405 to 1409 investigates the storage stability of puff pastry dough. A number of parameters were examined including varying the water content, and adding sorbitol, dough conditioner, potassium sorbate, gum arabic and butylated hydroxy anisole. In addition, the wheat flour used was modified by replacing it with flour which had been pretreated by heating to partially inactivate its enzyme activity.

The heat pretreatment was carried out at 148.9°C for 0, 20, 40 and 50 minutes, at 176.7°C for 1, 5, 10, 20 and 30 minutes and at 204.4°C for 0, 5, 10, 15 and 20 minutes. The investigators found that the lipoxygenase activity decreased rapidly during the first 20 minutes at all three temperatures but that the alpha-amylase was more heat resistant. Even the most severe heating for 20 minutes at 204.4°C caused only about a 70% decrease in amylase activity. The investigators also noted that the heat pretreatment had an adverse effect on the baking properties of the flour, attributed to denaturation of the wheat gluten.

The overall conclusion of the experimental program was that a puff pastry dough could be produced with a water activity of 0.9 by adding 12% sorbitol and a dough conditioner, and by using a flour heat treated at 176.7°C for 10 minutes. The heat-treated flour contained 6% water by weight and the total puff pastry dough composition was 20.5% water by weight. Storage tests indicated that the product was stable against microbiological spoilage or oxidative rancidity at 5°C and 15°C. At the higher storage temperature, however, loss in baking quality was observed. This was attributed to partial melting of the puff pastry margarine.

It has been found that a storage-stable dough can be obtained wherein stability is achieved by using a mixture of fat and flour which has been exposed to heat pretreatment under carefully controlled moisture conditions thereby minimizing the loss in baking quality of the dough.

Document US 4 777 057 discloses a semi-prepared packed dough within a heat-resistant packaging container which is heat-treated after the container is sealed.

In European Patent Application No. 112,504 a dehydrated base product is disclosed for making thickened sauces and soups, which are dispersible in hot water without forming lumps. The process comprises premixing a starch material such as wheat flour with an optionally liquified, edible fat. The premix is then heated to an elevated temperature after adding 0.5 to 15 w/w% water or heated to an elevated temperature under elevated pressure, optionally without added water.

It has been found that a flour/fat mixture treated by heating under controlled conditions of temperature and moisture in a manner similar to that described in European Patent Application No. 112,504 can also be used as an ingredient of a storage-stable dough.

### SUMMARY OF THE INVENTION

In accordance with the present invention, a ready-to-bake dough which is storage stable at room temperature is provided. The dough generally comprises flour, edible fat, texturizer and water. When the dough is prepared, the flour and fat are pretreated by forming an essentially homogeneous premix. The premix is further processed either by adding water and heating, or by heating under pressure with or without the addition of water. The dough can be used to make cookies, biscuits, pastries and the like.

DETAILED DESCRIPTION OF THE INVENTION

The storage stable, ready-to-bake dough of the present invention comprises

15 to 60 w/w% flour;

5 to 40 w/w% edible fat;

5 to 40 w/w% texturizer; and

5 to 18 w/w% water

and having a water activity of ≤ 0.75 wherein the flour and edible fat are pretreated by forming an essentially homogeneous premix of flour and fat and either a) adding 0.5 to 15 w/w% water to the premix and heating the premix to an elevated temperature of 90-145°C or b) heating the premix to an elevated temperature of 90-145°C under elevated pressure of $0.5 \times 10^5$ - $3 \times 10^5$ Pa (0.5-3 bar) with or without the addition of 0.5-15 w/w% water.

The flour component of the dough according to the invention can be wheat, rye, rice or maize flour. Part of the flour, for example, up to 25 weight%, can be replaced by a cereal starch, for example, by wheat, maize or rice starch. The total amount of flour and starch in the dough is suitably 20 to 60 w/w%, preferably 25 to 57.5 w/w%.

Any fat of animal or vegetable origin can be used in formulating the dough. The fat should have a melting point low enough to impart a good taste to the dough but high enough to avoid processing difficulties. An emulsifier can be added to stabilize fats that are liquid or near liquid at processing and ambient storage temperature. The fat content of the dough can range from about 10 to 40% by weight, preferably 15 to 37.5% by weight and most peferably 17.5 to 35% by weight.

The texturizer is suitably a polyol, such as glycerol or a water soluble, optionally hydrogenated, monosaccharide, disaccharide or polysaccharide, having a degree of polymerization between 3 and 50. Examples of suitable texturizers include glycerol, glucose, fructose, sucrose, honey, glucose syrups, fructose syrups, starch hydrolysates containing oligomers up to 100 DP, especially dextrose oligomers having 1 to 30 dextrose units, as well as sorbitol, maltitol, and hydrogenated starch hydrolysates. The amount of the texturizing agent present in the dough can vary from 10 to 35 w/w%, preferably 12.5 to 32 w/w% and most preferably 14 to 30 w/w%.

The water content of the product is limited to 5 to 18 w/w% and is advantageously in the range of 6 to 16 w/w% preferably in the range of 7 to 15 w/w% and most preferably in the range of 8 to 14 w/w%.

The ingredients of the dough product, particularly the texturizer, are preferably present in such quantities to ensure a water activity value of 0.75 or less.

By "essentially homogeneous premix" is meant a mixture which is homogeneous when judged by baker's standards.

The premix can be heated gradually to the desired final elevated temperature which can range from 90 to 145°C, preferably 95 to 135°C and most preferably 100 to 120°C. Lower temperatures require impractically long treatment times whereas higher temperatures tend to result in decomposition and discoloration of the products and poor baking qualities.

The duration of the heat treatment including the time to reach the desired temperature can vary within wide limits. This depends on a number of factors, for example, whether the treatment is batch or continuous. If the treatment is batch, it depends on the size of the batch, the rate of application of heat and the final temperature required. For a batch process with a gradual increase in temperature the time is usually between 10 and 100 minutes. For a continuous process, which is preferred, the residence time is shorter than the corresponding batch time and can be between 0.1 and 60 minutes, preferably between 0.5 and 20 minutes, and most preferably between 0.5 and 10 minutes.

The premix is preferably heated under elevated pressure without the addition of water. When the premix is heated to an elevated temperature under elevated pressure the elevated pressure can be that generated at the temperature in question when the premix is maintained under sealed conditions as in a batch process.

Alternatively, the pressure can be that under which the premix passes through a continuous apparatus. It has been found that a pressure of 0.5 to 3 bar is suitable, but the optimum pressure will depend upon the apparatus, and should be chosen on a case by case basis bearing in mind that pressure that is too high may result in separation of the fat.

It is also advantageous to cool the heated premix with agitation in an inert gas, for example, in a nitrogen atmosphere.

Once the premix of flour and fat has been prepared, the blending of the premix with the other components of the storage-stable dough can be carried out by conventional means in an industrial mixer. Water may be added alone or as part of a sugar syrup or starch hydrolysate.

In addition to the essential ingredients described above, the dough can also contain optional components which improve quality, for example, milk solids and dried egg, or additives for making special products, (such as doughs containing particles of chocolate for making chocolate chip cookies). All ingredients of the dough such as salt, milk powder, dried egg, and the like, except the texturizer and certain low melting ingredients such as chocolate chips can be introduced into the dough in the flour before the flour is heated in the premix. Similarly, fat soluble flavors can be added to the fat.

The dough product of this invention and its mode of preparation will now be further described with reference to the following Examples. All parts and percentages are by weight unless otherwise noted.

Example 1

In this Example the flour/fat premix was treated in a batch process.

25 kilograms (kg) vegetable fat were melted at 60°C in a sealable container and thoroughly mixed with 40 kg wheat flour and 2.7 kg of a mixture of skimmed milk powder (1 kg), egg yolk powder (1 kg), egg white powder (0.4 kg) and salt (0.3 kg).

The container was then sealed and the mixture heated up to 110°C over a period of 30 minutes. After cooling to 35°C the mixture was poured into cooling pans and allowed to cool to 18°C. It was then kneaded prior to admixing with the other dough ingredients.

The texturizer comprised 22.5 kg of glucose syrup (containing 80% by weight dissolved solids) to which was added 2.5 kg water. The blend was then placed in a mixer followed by addition of the pretreated flour and fat. The whole mixture was kneaded until it was smooth and homogeneous.

The resulting dough comprised

| | |
|---|---|
| 43% | flour |
| 27% | fat |
| 24% | texturizer |
| 3% | other materials |
| 3% | added water, giving approximately 13% total water |

The dough had a water activity of 0.73, was storage stable for 12 months and could be rolled out into a sheet to bake biscuits (12 minutes at 190°C) or a pastry case for a pie or tart (45 minutes at 190°C). Alternatively the dough could be shaped before storage into shapes suitable for subsequent use, such as pie shells.

Example 2

The same premix ingredients of Example 1 were vigorously mixed in a continuous mixer before being pumped continuously into a scraped surface heat exchanger at a pressure of 0.5 to 3 bar. The temperature of the premix in the exchanger was raised to 108°C over a period of about 10 minutes. The premix was next fed continuously to a second scraped surface heat exchanger which acted as a cooler and in which, under a nitrogen atmosphere, the premix was cooled to 25°C. Finally, the premix was blended with the same amount of the same texturizer and with the same amount of water as in Example 1.

The dough was storage stable for more than 12 months and gave baked products of even better qualities than the product of Example 1.

**Claims**

1. A room temperature storage stable, ready to bake dough composition which comprises:
   15 to 60 w/w% flour;
   5 to 40 w/w% edible fat;
   5 to 40 w/w% texturizer; and
   5 to 18 w/w% water
   and having a water activity of ≤ 0.75 wherein the flour and edible fat are pretreated by forming an essentially homogeneous premix of flour and fat and either a) adding 0.5 to 15 w/w% water to the premix and heating the premix to an elevated temperature of 90-145°C or b) heating the premix to an elevated temperature of 90-145°C under elevated pressure of $0.5 \times 10^5$ - $3 \times 10^5$ Pa (0.5-3 bar) with or without the addition of 0.5-15 w/w% water.

2. The dough composition of claim 1, wherein the flour is at least one type selected from the group consisting of rye, rice or maize flour.

3. The dough composition of claim 2, wherein a portion of the flour is replaced by a cereal starch.

4. The dough composition of claim 2, wherein the content of flour in the dough is 25 to 57.5 w/w%.

5. The dough composition of claim 1, wherein the fat content of the dough is 15 to 37.5% by weight.

6. The dough composition of claim 1, wherein the texturizer is a polyol.

7. The dough composition of claim 6, wherein the texturizer is a water soluble, optionally hydrogenated, monosaccharide, disaccharide or polysaccharide having a degree of polymerization between 3 and 50.

8. The dough composition of claim 7, wherein the texturizer is at least one selected from the group consisting of glycerol, sucrose, glucose, fructose, and starch hydrolysates containing dextrose oligomers having 1 to 30 dextrose units, sorbitol, maltitol, and hydrogenated starch hydrolysates.

**9.** The dough composition of claim 8, wherein the texturizer is at least one selected from the group consisting of glucose syrup, fructose syrup and honey.

**10.** The dough composition of claim 1, wherein the amount of the texturizing agent varies from 10 to 35 w/w%.

**11.** The dough composition of claim 1, wherein the water content of the dough varies from 6 to 16 w/w%.

**12.** The dough composition of claim 1, wherein the premix is heated in a batch process with a gradual increase in temperature, for 10 to 100 minutes.

**13.** The dough composition of claim 1, wherein the premix is heated in a continuous process for a residence time of 0.1 to 60 minutes.

**14.** The dough composition of claim 1, wherein the premix is cooled with agitation under an inert gas.

**Revendications**

**1.** Composition de pâte prête à la cuisson, pouvant être conservée à température ambiante, qui comprend :

     15 à 60 % en poids/poids de farine :

     5 à 40 % en poids/poids d'une matière grasse comestible :

     5 à 40 % en poids/poids d'un texturant : et

     5 à 18 % en poids/poids d'eau

et ayant une activité d'eau inférieure ou égale à 0,75, la farine et la matière grasse comestible étant prétraitées par formation d'un prémélange, pratiquement homogène, de farine et de matière grasse et a) addition de 0,5 à 15 % en poids/poids d'eau au prémélange et chauffage du prémélange à une température élevée, comprise dans l'intervalle de 90 à 145°C, ou bien b) chauffage du prémélange à une température élevée, comprise dans l'intervalle de 90 à 145°C, sous une haute pression comprise dans l'intervalle de $0,5 \times 10^5$ à $3 \times 10^5$ Pa (0,5 à 3 bars), avec ou sans addition de 0,5 à 15 % en poids/poids d'eau.

**2.** Composition de pâte suivant la revendication 1, dans laquelle la farine consiste en au moins un type choisi dans le groupe comprenant la farine de seigle, la farine de riz ou la farine de maïs.

**3.** Composition de pâte suivant la revendication 2, dans laquelle une portion de la farine est remplacée par un amidon de céréale.

**4.** Composition de pâte suivant la revendication 2, dans laquelle la quantité de farine dans la pâte est comprise dans l'intervalle de 25 à 57,5 % en poids/poids.

**5.** Composition de pâte suivant la revendication 1, dans laquelle la teneur en matière grasse de la pâte est comprise dans l'intervalle de 15 à 37,5 % en poids.

**6.** Composition de pâte suivant la revendication 1, dans laquelle le texturant est un polyol.

**7.** Composition de pâte suivant la revendication 6, dans laquelle le texturant est un monosaccharide, disaccharide ou polysaccharide hydrosoluble, facultativement hydrogéné, ayant un degré de polymérisation de 3 à 50.

**8.** Composition de pâte suivant la revendication 7, dans laquelle le texturant est au moins un agent choisi dans le groupe comprenant le glycérol, le saccharose, le glucose, le fructose et des hydrolysats d'amidon contenant des oligomères de dextrose comprenant 1 à 30 motifs dextrose, le sorbitol, le maltitol et des hydrolysats d'amidon hydrogénés.

**9.** Composition de pâte suivant la revendication 8, dans laquelle le texturant consiste en au moins un agent choisi dans le groupe comprenant le sirop de glucose, le sirop de fructose et le miel.

**10.** Composition de pâte suivant la revendication 1, dans laquelle la quantité de l'agent texturant varie de 10 à 35 % en poids/poids.

**11.** Composition de pâte suivant la revendication 1, dans laquelle la teneur en eau de la pâte varie de 6 à 16 % en poids/poids.

**12.** Composition de pâte suivant la revendication 1, dans laquelle le prémélange est chauffé dans un procédé discontinu, avec élévation progressive de la température, pendant un temps de 10 à 100 minutes.

**13.** Composition de pâte suivant la revendication 1, dans laquelle le prémélange est chauffé dans un procédé continu pendant un temps de séjour de 0,1 à 60 minutes.

14. Composition de pâte suivant la revendication 1, dans laquelle le prémélange est refroidi avec agitation sous un gaz inerte.

**Patentansprüche**

1. Eine bei Zimmertemperatur lagerfähige, zum Backen bereite Teigzusammensetzung, welche umfasst:
   15 bis 60 % (Gewicht/Gewicht) Mehl;
   5 bis 40 % (Gewicht/Gewicht) essbares Fett;
   5 bis 40 % (Gewicht/Gewicht) Texturiermittel; und
   5 bis 18 % (Gewicht/Gewicht) Wasser
   und welche eine Wasseraktivität von ≤ 0,75 aufweist, wobei das Mehl und das essbare Fett vorbehandelt sind durch Bildung eines im wesentlichen homogenen Vorgemisches aus Mehl und Fett und entweder a) Zusatz von 0,5 bis 15 % (Gewicht/Gewicht) Wasser zum Vorgemisch und Erhitzen des Vorgemisches auf eine erhöhte Temperatur von 90 bis 145°C oder b) Erhitzen des Vorgemisches auf eine erhöhte Temperatur von 90 bis 145°C unter erhöhtem Druck von 0,5 x $10^5$ bis 3 x $10^5$ Pa (0,5 bis 3 Bar) mit oder ohne Zusatz von 0,5 bis 15 % (Gewicht/Gewicht) Wasser.

2. Teigzusammensetzung nach Anspruch 1, in welcher das Mehl mindestens ein Typus ausgewählt aus der Gruppe bestehend aus Roggen-, Reis- oder Maismehl ist.

3. Teigzusammensetzung nach Anspruch 2, in welcher ein Teil des Mehls durch eine Getreidestärke ersetzt ist.

4. Teigzusammensetzung nach Anspruch 2, in welcher der Gehalt an Mehl im Teig 25 bis 57,5 % (Gewicht/Gewicht) beträgt.

5. Teigzusammensetzung nach Anspruch 1, in welcher der Fettgehalt des Teiges 15 bis 37,5 Gewichtsprozent beträgt.

6. Teigzusammensetzung nach Anspruch 1, in welcher das Texturiermittel ein Polyol ist.

7. Teigzusammensetzung nach Anspruch 6, in welcher das Textuiermittel ein wasserlösliches, gegebenenfalls hydriertes Monosaccharid, Disaccharid oder Polysaccharid mit einem Polymerisationsgrad zwischen 3 und 50 ist.

8. Teigzusammensetzung nach Anspruch 7, in welcher das Texturiermittel mindestens eine Verbindung aus der Gruppe bestehend aus Glycerin, Saccharose, Glucose, Fructose und Stärkehydrolysaten, welche Dextroseoligomere mit 1 bis 30 Dextroseeinheiten enthält, Sorbit, Maltit und hydrierten Stärkehydrolysaten ist.

9. Teigzusammensetzung nach Anspruch 8, in welcher das Texturiermittel mindestens eine Komponente ausgewählt aus der Gruppe bestehend aus Glucosesirup, Fructosesirup und Honig ist.

10. Teigzusammensetzung nach Anspruch 1, in welcher die Menge an Texturiermittel zwischen 10 und 35 % (Gewicht/Gewicht) variiert.

11. Teigzusammensetzung nach Anspruch 1, in welcher der Wassergehalt des Teiges von 6 bis 16 % (Gewicht/Gewicht) variiert.

12. Teigzusammensetzung nach Anspruch 1, in welcher das Vorgemisch in einem ansatzweisen Verfahren mit einer allmählichen Temperaturerhöhung während 10 bis 100 Minuten erhitzt wird.

13. Teigzusammensetzung nach Anspruch 1, in welcher das Vorgemisch in einem kontinuierlichen Verfahren während einer Verweilzeit von 0,1 bis 60 Minuten erhitzt wird.

14. Teigzusammensetzung nach Anspruch 1, in welcher das Vorgemisch unter Rühren unter einer inerten Gasatmosphäre gekühlt wird.